# EUROPEAN PATENT APPLICATION

(11) **EP 4 125 272 A1**
(43) Date of publication of application: **01.02.2023**
(21) Application number: 22174759.5
(22) Date of filing: 23.05.2022
(51) Int. Cl.: H04N 21/2187, H04N 21/4782

(54) **METHOD AND APPARATUS FOR DISPLAYING PAGE, ELECTRONIC DEVICE AND STORAGE MEDIUM**

(30) Priority: 30.07.2021 CN 202110869631
(71) Applicant: Beijing Dajia Internet Information Technology Co., Ltd., Beijing 100085 (CN)
(72) Inventor: LI, Shangsheng, Beijing, 100085 (CN)
(74) Representative: Angerhausen, Christoph

(57) **Abstract**

A method and an apparatus for displaying a page. The method includes: sending a dynamic configuration request of a tool display area in a target page in response to a page loading request of the target page in a live streaming scene; receiving dynamic configuration information corresponding to the scene identification information; and displaying the target page based on the dynamic configuration information. By using the embodiments of the present disclosure, dynamic configuration information corresponding to different live broadcast scenarios can be dynamically delivered, so as to realize dynamic page update and display, and greatly improve the convenience and efficiency of page update configuration.

## Description

### FIELD

The present disclosure relates to a field of Internet technologies, and in particular, to a method and apparatus for displaying a page, an electronic device, and a storage medium.

### BACKGROUND

With the rapid development of Internet technology and the popularization of electronic devices, applications have also been widely used. In order to better meet the needs of users, applications often have multiple application scenarios, and the iterative update of a page corresponding to an application scenario is relative fast.

In the related art, when a new page function is added, the tools related to the new function will be written in a fixed position in the tool area on the client side, and the style and layout are also hard-coded on the client side. Taking pages of the live broadcast scene as an example, some live broadcast function tools are often displayed on a fixed tool area of the page. The location and style layout of these tools are fixed. If the type or style layout of tools displayed in some areas of the page needs to be updated, it is often necessary to re-develop the corresponding functional tools and implement them by issuing a new version. In the above-mentioned related art, the application page cannot be dynamically adjusted, and the page update is cumbersome and inefficient.

### SUMMARY

The present disclosure provides a method and an apparatus for displaying a page, an electronic device and a storage medium, so as to at least solve the problems in the related art that application pages cannot be dynamically adjusted, and page updates are cumbersome and inefficient. The technical solutions of the present disclosure are described as follows.

According to embodiments of the present disclosure, a method for displaying a page is provided. The method includes: sending a dynamic configuration request of a tool display area in a target page in response to a page loading request of the target page in a live streaming scene, in which the dynamic configuration request includes scene identification information of the live streaming scene, in which the live streaming scene is corresponding to the target page; receiving dynamic configuration information corresponding to the scene identification information, in which the dynamic configuration information represents attribute information of a tool set pre-configured for the live streaming scene; and displaying the target page based on the dynamic configuration information.

In some embodiments, the tool display area comprises at least one unit display area, and the dynamic configuration information comprises a sub-tool set corresponding to each of the at least one unit display area and display configuration information of a tool in the sub-tool set, and the sub-tool set comprises a plurality of tools arranged according to a display priority; in which said displaying the target page based on the dynamic configuration information includes: obtaining preset tool authorization information; determining an authorization tool corresponding to the at least one unit display area based on the preset tool authorization information and the display priority; displaying the target page comprising the authorization tool based on the display configuration information; in which the display configuration information is display configuration information of the authorization tool corresponding to each of the at least one unit display area.

In some embodiments, the dynamic configuration information further comprises: at least one-level sub-tools of tools in the sub-tool set and display configuration information of the at least one-level sub-tools; the at least one unit display area displays the authorization tool corresponding to the at least one unit display area, and the method further includes: displaying a sub-tool based on the display configuration information of the sub-tool in response to a sub-tool display instruction triggered by an authorization tool corresponding to a unit display area; in which the sub-tool is a next-level sub-tool of the authorization tool corresponding to the sub-tool display instruction.

In some embodiments, the at least one unit display area comprises a plurality of unit display areas arranged in a preset order, and said determining the authorization tool corresponding to the at least one unit display area based on the preset tool authorization information and the display priority comprises: traversing the plurality of unit display areas based on the preset order; determining a current tool in the sub-tool set corresponding to a currently traversed unit display area, wherein the current tool is a tool with a highest display priority and without authorization verification in the sub-tool set corresponding to the currently traversed unit display area; obtaining an authorization verification result of the current tool by performing authorization verification on the current tool based on the preset tool authorization information; and determining the current tool as the authorization tool of the currently traversed unit display area in response to the authorization verification result of the current tool indicating that the authorization verification passes.

In some embodiments, determining the authorization tool corresponding to the at least one unit display area based on the preset tool authorization information and the display priority comprises: updating the current tool in response to the authorization verification result of the current tool indicating that the authorization verification fails to pass; and based on the current tool updated, skipping to step of said obtaining the authorization verification result of the current tool by performing the authorization verification on the current tool based on the preset tool authorization information.

In some embodiments, the method includes: determining that the currently traversed unit display area is null in response to the current tool being a tool with a lowest display priority in the sub-tool set corresponding to the currently traversed unit display area and the authorization verification result of the current tool indicating that the authorization verification fails to pass.

In some embodiments, displaying the target page comprising the authorization tool based on the display configuration information comprises: displaying the target page comprising the authorization tool based on the display configuration information of the authorization tool corresponding to a target unit display area; in which the target unit display area is a non-null unit display area in the at least one unit display area.

According to embodiments of the present disclosure, a method for displaying a page is provided. The method includes: receiving a dynamic configuration request of a tool display area in a target page sent by a target terminal in response to a page loading request of the target page in a live streaming scene, in which the dynamic configuration request includes scene identification information of the live streaming scene, in which the live streaming scene is corresponding to the target page; obtaining dynamic configuration information corresponding to the scene identification information, in which the dynamic configuration information represents attribute information of a tool set pre-configured for the live streaming scene; and sending the dynamic configuration information to the target terminal, so as to enable the target terminal to display the target page based on the dynamic configuration information.

In some embodiments, obtaining the dynamic configuration information corresponding to the scene identification information comprises: obtaining the dynamic configuration information corresponding to the scene identification information based on first preset mapping information; wherein the first preset mapping information represents a mapping relation between dynamic configuration information corresponding to a plurality of live streaming scenes and scene identification information corresponding to a live streaming scene.

In some embodiments, obtaining the dynamic configuration information corresponding to the scene identification information comprises: determining target user type information corresponding to the target terminal; obtaining dynamic configuration information corresponding to the target user type information from the dynamic configuration information corresponding to the scene identification information based on second preset mapping information; wherein the second preset mapping information represents a mapping relation between dynamic configuration information corresponding to different user type information in a plurality of live streaming scenes and scene identification information corresponding to a live streaming scene.

In some embodiments, before obtaining the dynamic configuration information corresponding to the scene identification information, the method further comprises: obtaining a permission verification result by performing a permission verification on the target terminal based on preset dynamic configuration information; and obtaining the dynamic configuration information corresponding to the scene identification information in response to the permission verification result indicating that the permission verification passes.

According to embodiments of the present disclosure, an apparatus for displaying a page is provided. The apparatus includes: a dynamic configuration request sending module, configured to send a dynamic configuration request of a tool display area in a target page in response to a page loading request of the target page in a live broadcast scene, in which the dynamic configuration request includes scene identification information of the live streaming scene, in which the live streaming scene is corresponding to the target page; a dynamic configuration information receiving module, configured to receive dynamic configuration information corresponding to the scene identification information, in which the dynamic configuration information represents attribute information of a tool set pre-configured for the live streaming scene; and a page displaying module, configured to display the target page based on the dynamic configuration information.

According to embodiments of the present disclosure, an electronic device is provided. The electronic device includes: a processor; a memory for storing instructions executable by the processor; in which, the processor is configured to execute the instructions to implement the method described above.

According to embodiments of the present disclosure, a computer-readable storage medium is provided. When instructions in the storage medium are executed by a processor of an electronic device, the electronic device is caused to execute the method described above.

According to embodiments of the present disclosure, a computer program product is provided. The computer program includes computer instructions, when the computer instructions are executed by a processor, the method described above is implemented.

The technical solutions provided by the embodiments of the present disclosure bring at least the following beneficial effects. During the page loading process, combined with the target scene identification information of the target live broadcast scene corresponding to the target page, the target dynamic configuration information configured for the target live broadcast scene can be obtained, and then the page can be dynamically updated and displayed according to the different needs of different live broadcast scenes. There is no need to issue an application version, which greatly improves the convenience and efficiency of updating and configuring the application page.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated into and constitute a part of the present disclosure, illustrate embodiments consistent with the present disclosure, and together with the description, serve to explain the principles of the present disclosure and do not unduly limit the present disclosure.
FIG. 1 is a schematic diagram of an application environment according to an exemplary embodiment;
FIG. 2 is a flowchart of a method for displaying a page according to an exemplary embodiment;
FIG. 3 is a flowchart of a method for displaying a page according to another exemplary embodiment;
FIG. 4 is a schematic diagram of a target page according to an exemplary embodiment;
FIG. 5 is a flowchart showing a target page based on dynamic configuration information according to an exemplary embodiment;
FIG. 6 is a flowchart of determining an authorization tool corresponding to at least one unit display area based on preset tool authorization information and a display priority, according to an exemplary embodiment;
FIG. 7 is a schematic diagram of a target page displaying a sub-tool according to an exemplary embodiment;
FIG. 8 is a flowchart of a method for displaying a page according to another exemplary embodiment;
FIG. 9 is a flowchart of a method for displaying a page according to an exemplary embodiment;
FIG. 10 is a block diagram of an apparatus for displaying a page according to an exemplary embodiment;
FIG. 11 is a block diagram of an apparatus for displaying a page according to an exemplary embodiment;
FIG. 12 is a block diagram of an electronic device for displaying a page according to an exemplary embodiment;
FIG. 13 is a block diagram of an electronic device for displaying a page according to an exemplary embodiment.

### DETAILED DESCRIPTION

In order to make those skilled in the art better understand the technical solutions of the present disclosure, the technical solutions in the embodiments of the present disclosure will be clearly and completely described below with reference to the accompanying drawings.

It should be noted that the terms "first" and "second" in the description and claims of the present disclosure and the above-mentioned drawings are used to distinguish similar services, and are not necessarily used to describe a specific order or sequence. It should be understood that the data so used may be interchanged under appropriate circumstances such that the embodiments of the disclosure described herein can be practiced in sequences other than those illustrated or described herein. The implementations described in the illustrative examples below are not intended to represent all implementations consistent with this disclosure. Instead, they are merely examples of apparatus and methods consistent with some aspects of the present disclosure as recited in the appended claims.

It should be noted that the user information (including but not limited to user equipment information, user personal information, etc.) and data (including but not limited to display data, analysis data, etc.) involved in this disclosure are all authorized by the user or information and data fully authorized by respective parties.

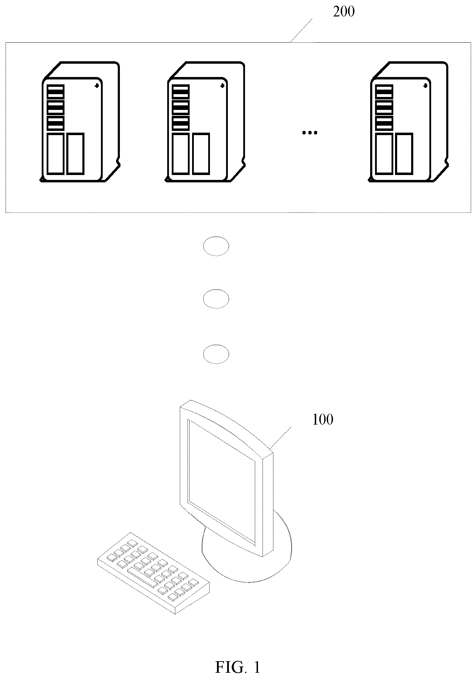

Please refer to FIG. 1, which is a schematic diagram of an application environment according to an exemplary embodiment. As shown in FIG. 1, the application environment may include a terminal 100 and a server 200.

In an optional embodiment, the terminal 100 may be used to display pages in various scenarios. Specifically, the terminal 100 may include, but is not limited to, smart phones, desktop computers, tablet computers, laptop computers, smart speakers, digital assistants, augmented reality (AR)/virtual reality (VR) devices, smart wearable devices and other types of electronic devices, and may also be software, such as applications, that run on the above-mentioned electronic devices. Optionally, the operating system running on the electronic device may include, but is not limited to, an Android system, an IOS system, linux, windows, and the like.

In an optional embodiment, the configuration server 200 may provide background services for the terminal 100, and provide configuration requirements for the area that the terminal 100 needs to dynamically adjust. Specifically, the configuration server 200 may be an independent physical server, or a server cluster or distributed system composed of multiple physical servers, or may provide cloud services, cloud databases, cloud computing, cloud functions, cloud storage, and network services, cloud communication, middleware services, domain name services, security services, CDN (Content Delivery Network, content distribution network), and cloud servers for basic cloud computing services such as big data and artificial intelligence platforms.

In addition, it should be noted that what is shown in FIG. 1 is only an application environment provided by the present disclosure, and in practical applications, other application environments may also be included, for example, more terminals may be included.

In the embodiment of the present disclosure, the above-mentioned terminal 100 and the configuration server 200 may be directly or indirectly connected through wired or wireless communication, which is not limited in this disclosure.

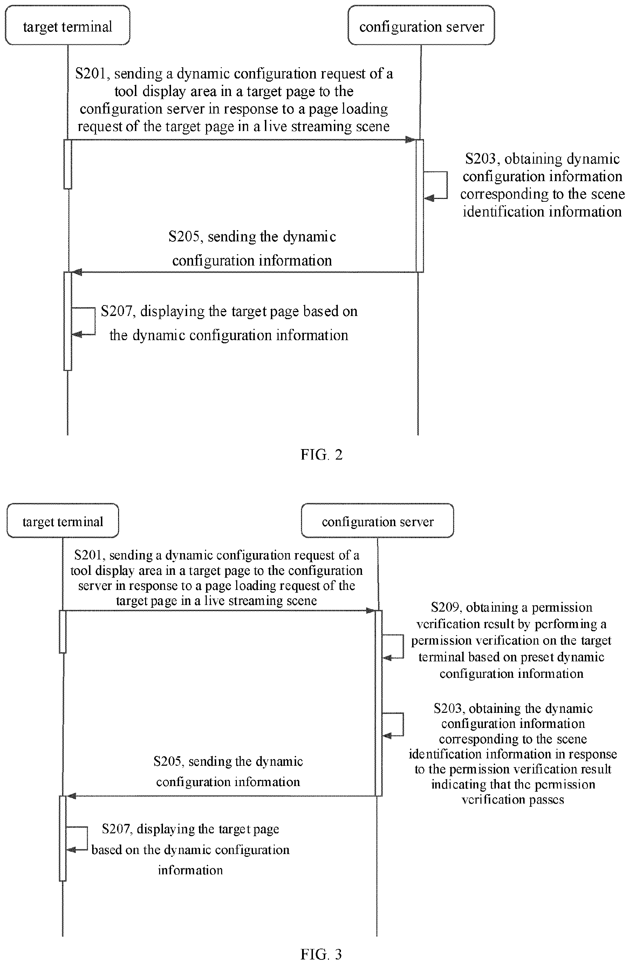

FIG. 2 is a flowchart of a method for displaying a page according to an exemplary embodiment. As shown in FIG. 2, the method for displaying a page may include step S201, sending, by a target terminal, a dynamic configuration request of a tool display area in a target page to a configuration server in response to a page loading request of the target page in a live streaming scene.

In a specific embodiment, the target terminal may provide a corresponding interface for the user to trigger a page loading request. Correspondingly, after the page loading request is triggered, the sending of the dynamic configuration request may be triggered.

In practical applications, different application scenarios often correspond to different pages due to the need to requirements of providing different services. Correspondingly, corresponding scene identification information may be set for each page corresponding to the live streaming scene. In a specific embodiment, the above dynamic configuration request may include scene identification information of the live streaming scene, in which the live streaming scene is corresponding to the target page.

In a specific embodiment, the live streaming scene may be different in combination with the actual application service. In a specific embodiment, the live streaming scene may include, but is not limited to, a video live streaming scene, a voice live streaming scene, a chat room broadcast scene, a stream push scene of the host (a scene during the live streaming of the host), and the like.

The method also includes step S203, obtaining, by a configuration server, dynamic configuration information corresponding to the scene identification information.

In an optional embodiment, the dynamic configuration information may be pre-set for each live streaming scene in combination with actual application requirements. Optionally, the dynamic configuration information of any live streaming scene can be continuously updated and changed according to the requirements. The above-mentioned dynamic configuration information may represent attribute information of a tool set pre-configured for the above-mentioned live streaming scene.

In an optional embodiment, obtaining, by the configuration server, the dynamic configuration information corresponding to the scene identification information may include: obtaining, by the configuration server, the dynamic configuration information corresponding to the scene identification information based on first preset mapping information

In a specific embodiment, the above-mentioned first preset mapping information represents a mapping relation between dynamic configuration information corresponding to a plurality of live streaming scenes and scene identification information corresponding to a live streaming scene.

In the above embodiment, combined with the first preset mapping information representing the mapping relationship between the dynamic configuration information corresponding to the multiple live streaming scenes and the scene identification information corresponding to the live streaming scene, dynamic configuration requirements can be accurately provided for the tool display areas of different live streaming scenes.

In an optional embodiment, obtaining, by the configuration server, the dynamic configuration information corresponding to the target scene identification includes: determining, by the configuration server, target user type information corresponding to the target terminal; obtaining, by the configuration server, dynamic configuration information corresponding to the target user type information from the dynamic configuration information corresponding to the scene identification information based on second preset mapping information.

In a specific embodiment, the above-mentioned second preset mapping information represents a mapping relation between dynamic configuration information corresponding to different user type information in a plurality of live streaming scenes and scene identification information corresponding to a live streaming scene. Correspondingly, the dynamic configuration information may be determined from the dynamic configuration information corresponding to the scene identification information in combination with the target user type information.

In a specific embodiment, the user information of the corresponding user may be obtained based on the user identifier corresponding to the target terminal, and the corresponding target user type information may be determined based on the user information. Optionally, the user identification may include, but is not limited to, a user account and the like.

In a specific embodiment, user classification may be performed in combination with actual application scenarios, taking the live streaming scenario as a class, and the user type information may include new anchors, regular anchors, and the like. Correspondingly, it is possible to combine the user's broadcast times (user information) to determine that the user type information whose broadcast times are greater than or equal to the preset threshold is a regular anchor; otherwise, it is determined that the user type information whose broadcast times are less than the preset threshold is a new anchor. Specifically, the preset threshold may be a threshold for distinguishing two types of anchors, and may be preset in combination with actual application requirements.

In the above embodiment, different dynamic configuration information is provided for different types of users in the same scene in combination with the user type information, so as to realize the differentiated configuration in the same live streaming scene, and greatly improve the user experience; and in combination with the mapping relation between dynamic configuration information corresponding to different user type information in a plurality of live streaming scenes and scene identification information corresponding to a live streaming scene, the dynamic configuration information can be determined quickly in responding to the dynamic configuration requirements of the page in different live streaming scenarios, thereby greatly improving the dynamic configuration efficiency of the page.

In an optional embodiment, in some test scenarios, or considering issues such as version matching, the service of dynamically configuring the corresponding tool display area may only be opened to some users. Correspondingly, the identification information of the target scenario is obtained from the configuration server. Before obtaining the dynamic configuration information corresponding to the scene identification information, as shown in FIG. 3, the above method may further include: step S209, obtaining a permission verification result by performing a permission verification on the target terminal based on preset dynamic configuration information.

Correspondingly, the above step S203 may include a step of obtaining, by the configuration server, the dynamic configuration information corresponding to the scene identification information in response to the permission verification result indicating that the permission verification passes.

In a specific embodiment, the preset dynamic configuration permission information may be preset information for verifying whether the user has the permission to dynamically configure the corresponding tool display area. Optionally, the foregoing preset dynamic configuration permission information may include dynamic configuration permission information of at least one dimension.

In an optional embodiment, taking the preset dynamic configuration permission information including the dynamic configuration permission information of an application version dimension as an example, optionally, the dynamic configuration permission information of the application version dimension may be a preset version, and the preset version refers to a version of the corresponding tool display area that has been released is compatible and dynamically configured, or a version of the corresponding tool display area that is compatible and dynamically configured for multiple test versions during the testing process. Correspondingly, it can be determined whether the application version corresponding to the target terminal is the preset version, and if the application version corresponding to the target terminal is the preset version, the authority verification result can be that the authority verification passes; otherwise, the application version corresponding to the target terminal is not the preset version, the permission verification result may be that the permission verification fails to pass.

In an optional embodiment, taking the preset dynamic configuration permission information including the dynamic configuration permission information of the user identification dimension as an example, optionally, the dynamic configuration permission information of the user identification dimension may be a preset tail number, the preset tail number can be a tail number of the user ID of the corresponding tool display area service of the open dynamic configuration; correspondingly, it can be determined whether the tail number of the user ID corresponding to the target terminal is a preset tail number, and correspondingly, if the tail number of the user ID corresponding to the target terminal is a preset tail number, the authority verification result can be that the authority verification passes; otherwise, if the tail number of the user ID corresponding to the target terminal is not the preset tail number, the authority verification result can be that the authority verification fails to pass.

In addition, in practical applications, if the permission verification result is that the permission verification fails to pass, the configuration server may not respond to the dynamic configuration request. Correspondingly, when the target terminal does not receive the corresponding response of the dynamic configuration request within a preset time period after the dynamic configuration request is sent, the page may be displayed with the page configuration information corresponding to the locally preset tool display area.

In the above embodiment, permission verification is performed before obtaining the dynamic configuration information, so that the tool display area in the page can be dynamically configured, and the configuration service pressure can be reduced when the dynamic configuration requirements are met.

The method also includes step S205, sending, by the configuration server, the dynamic configuration information to the target terminal.

In a specific embodiment, after determining the dynamic configuration information, the configuration server can send the dynamic configuration information to the target terminal.

The method also includes step S207, displaying, by the target terminal, the target page based on the dynamic configuration information.

In a specific embodiment, after obtaining the dynamic configuration information, the target terminal may render the target page in combination with the dynamic configuration information.

In an optional embodiment, the above-mentioned tool display area includes at least one unit display area. Specifically, the unit display area may be an area used to display a single tool in the tool display area. Specifically, it may be set in combination with the layout of the tool display area. Correspondingly, the dynamic configuration information may include a sub-tool set corresponding to each of the at least one unit display area and display configuration information of a tool in the sub-tool set. Optionally, the sub-tool set includes a plurality of tools arranged according to a display priority.

Specifically, the display configuration information of any tool may include the type, display style, and display layout information of the tool.

In a specific embodiment, the display configuration information of the tool may include, but is not limited to, the type of the control (e.g., switch button, pop-up window, etc.), the pattern of the control, the description text of the function of the control, the information of at least one language that supports translation, and the layout of the control. (e.g. list, nine-square grid), etc.

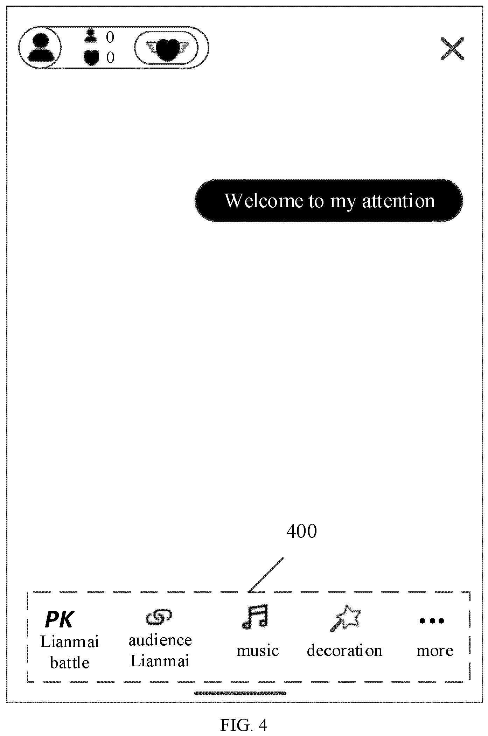

In a specific embodiment, in a streaming scenario of an anchor, as shown in FIG. 4, FIG. 4 is a schematic diagram of a target page according to an exemplary embodiment. Specifically, the area corresponding to 400 in FIG. 4 may be a tool display area. Correspondingly, the tools displayed in the tool display area may include function controls such as Lianmai (a kind of real-time interaction) battle, audience Lianmai, music, decoration, and more.

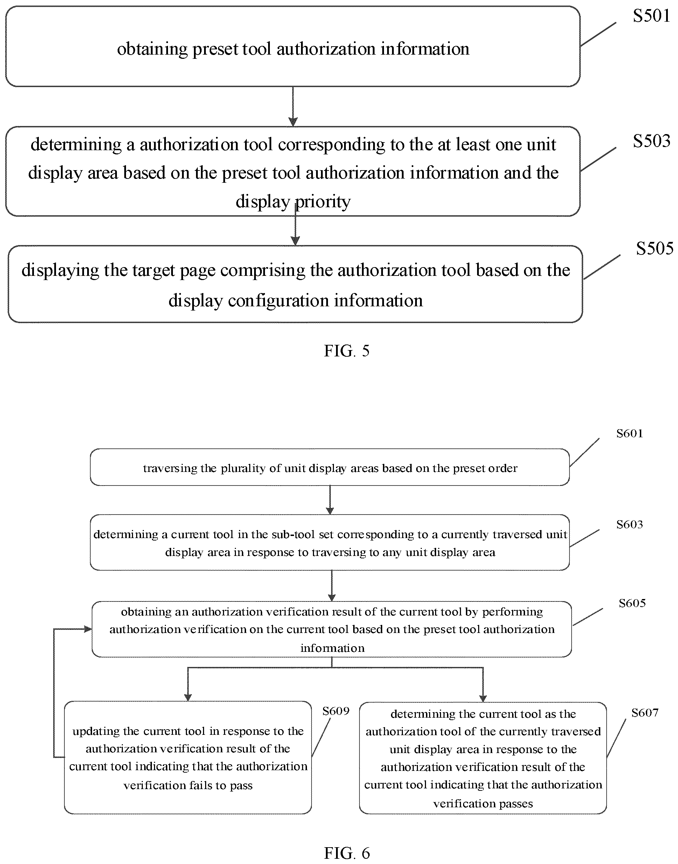

In a specific embodiment, only one tool can be displayed in any unit display area in the target page. Correspondingly, as shown in FIG. 5, the above-mentioned display of the target page based on the dynamic configuration information may include: step S501, obtaining preset tool authorization information.

In a specific embodiment, the above-mentioned preset tool authorization information may represent information of tools authorized to the target terminal. Optionally, the preset tool authorization information may be pre-configured by the corresponding business party, or may be obtained from the corresponding business party (servers of the business party) during the process of rendering the target page by the terminal.

The method also includes step S503, determining an authorization tool corresponding to the at least one unit display area based on the preset tool authorization information and the display priority.

In an optional embodiment, the at least one unit display area may include multiple unit display areas arranged in a preset order. Optionally, as shown in FIG. 6, the above-mentioned determining the authorization tool corresponding to the at least one unit display area based on the preset tool authorization information and the display priority includes: step S601, traversing the plurality of unit display areas based on the preset order; step S603, determining a current tool in the sub-tool set corresponding to a currently traversed unit display area, for example, in response to traversing to any unit display area, in which the current tool is a tool with a highest display priority and without authorization verification in the sub-tool set corresponding to the currently traversed unit display area; step S605, obtaining an authorization verification result of the current tool by performing authorization verification on the current tool based on the preset tool authorization information; step S607, determining the current tool as the authorization tool of the currently traversed unit display area in response to the authorization verification result of the current tool indicating that the authorization verification passes.

In another optional embodiment, as shown in FIG. 6, the above-mentioned determining the authorization tool corresponding to the at least one unit display area based on the preset tool authorization information and the display priority includes: step S609, updating the current tool in response to the authorization verification result of the current tool indicating that the authorization verification fails to pass.

Correspondingly, the method also includes: the based on the current tool updated, skipping to step of obtaining the authorization verification result of the current tool by performing the authorization verification on the current tool based on the preset tool authorization information.

In practical applications, the preset order may be the arrangement order of the plurality of unit display areas in a certain direction in the tool display area, for example, from left to right, from right to left, and so on. In a specific embodiment, for multiple tools in the sub-tool set corresponding to the currently traversed unit display area, authorization verification may be performed from high to low according to the display priority. Specifically, if the preset tool authorization information includes the corresponding current tool, the authorization verification result of the current tool corresponding to the unit display area indicates that the authorization verification passes; otherwise, if the preset tool authorization information does not include the corresponding current tool, the authorization verification result of the current tool corresponding to the unit display area indicates that the authorization verification fails to pass. Correspondingly, according to the display priority, the tool with the highest display priority among the unauthorized verification tools can be selected as the current tool corresponding to the unit display area, and the above process of the authorization verification can be repeated, until the authorization verification result of the current tool corresponding to the display area of the unit indicates that the verification passes. Correspondingly, the current tool whose authorization verification result is verified can be used as the authorization tool in the corresponding unit display area. Specifically, the authorization tool of any unit display area may be the tool finally displayed in the unit display area.

In an optional embodiment, the above-mentioned at least one unit display area may also be a unit display area. Correspondingly, a plurality of sub-tool sets corresponding to the unit display area may be selected in a descending order of the display priority, so as to determine the target authorized tool.

In the above embodiment, in the case where the tool display area includes multiple unit display areas arranged in a preset order, by traversing the multiple unit display areas in order, for each unit display area, the authorization verification may be performed on the multiple tools based on the display priority. On the basis of improving the richness of page configuration, the authorization tool that better meets the display needs can be selected first, and the experience can be better improved.

The method also includes step S505, displaying the target page including the authorization tool based on the target display configuration information.

In a specific embodiment, the target display configuration information may be the display configuration information of the authorization tool corresponding to each of the at least one unit display area. Correspondingly, after the authorization tool corresponding to the unit display area is determined, the target page including the authorization tool may be rendered in combination with the display configuration information of the authorization tool corresponding to at least one unit display area.

In the above embodiment, by configuring multiple tools for any unit display area in the tool display area, it is possible to configure multiple tools for one display area, and by combining the display priority and the preset tool authorization information, it is more flexibly to select display tools according to different requirements of services, thereby greatly improving the flexibility and richness of page configuration.

In an optional embodiment, there may be a tool that does not pass the verification in the tool combination corresponding to a certain unit display area. Correspondingly, the above method may further include: determining that the currently traversed unit display area is null in response to the current tool being a tool with a lowest display priority in the sub-tool set corresponding to the currently traversed unit display area and the authorization verification result of the current tool indicating that the authorization verification fails to pass.

In a specific embodiment, in the case that the currently traversed unit display area is null, that is, there is no tool that has passed the verification in the tool set corresponding to a certain unit display area, the unit display area may not display the tool, or, the tool of the subsequent unit display area (for example, sorting the unit display area from left to right) can be moved forward by one unit display area in sequence. Correspondingly, the unit display area with the verification passing tool is not null.

In the above-mentioned embodiment, for the unit display area that fails to pass the verification tool, it can be determined that the unit display area is null, so as to render the tool display area on the page according to the user's requirements, and improve the flexibility of dynamic configuration.

In an optional embodiment, displaying the target page including the authorization tool based on the target display configuration information includes: displaying the target page including the authorization tool based on the display configuration information of the authorization tool corresponding to a target unit display area.

In a specific embodiment, the target unit display area is a non-null unit display area in the at least one unit display area.

In the above embodiment, the rendering of the target page is performed in combination with the authorization tool in the non-null unit display area, and the dynamic configuration of the tool display area in the page can be performed according to the user's needs, which improves the flexibility and rationality of the dynamic configuration, and thus improving user needs.

In an optional embodiment, the tool displayed in the tool display area can often trigger the further display of information. Correspondingly, the above-mentioned dynamic configuration information further includes: at least one-level sub-tools of tools in the sub-tool set and display configuration information of the at least one-level sub-tools; the at least one unit display area displays an authorization tool corresponding to the at least one unit display area. Optionally, the method further includes: displaying a sub-tool based on the display configuration information of the sub-tool in response to a sub-tool display instruction triggered by the authorization tool corresponding to a unit display area.

In a specific embodiment, the sub-tool is a next-level sub-tool of the authorization tool corresponding to the sub-tool display instruction. Optionally, in the case where the sub-tool can further trigger tool display, the corresponding authorization tool may include at least two levels of sub-tools. Specifically, at least one level of sub-tools corresponding to the authorization tool may be set according to actual application requirements.

In an optional embodiment, the sub-tool may be displayed on the target page in the form of a pop-up window, or may be displayed by skipping to a new page.

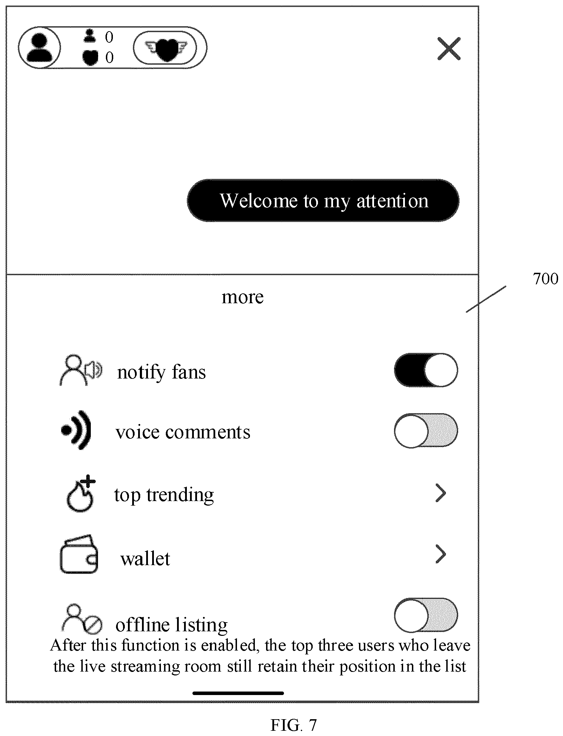

In a specific embodiment, with reference to the above-mentioned FIG. 4, it is assumed that the above-mentioned sub-tool display instruction is triggered based on "more" (authorization tool). Correspondingly, as shown in FIG. 7, FIG. 7 is a schematic diagram showing a target page with sub-tools. Specifically, the information corresponding to 700 may be "more" sub-tools. Specifically, the status information of whether the sub-tools such as "notify fans", "voice comments", and "offline listing" can be configured locally in the target terminal in advance. Correspondingly, when displaying sub-tools such as "voice comment" and "offline listing", the sub-tool can be displayed in combination with the locally configured status information. Specifically, the sub-tools "top trending" and "wallet" can also set sub-tools of the next level.

In the above embodiment, setting sub-tools for the authorization tool displayed on the target page in combination with the hierarchical structure can better meet different dynamic display requirements, and facilitate the subsequent rapid rendering of corresponding sub-pages, and improving the efficiency and diversity of display on pages.

It can be seen from the technical solutions provided in the above embodiments of the present disclosure that, during the page loading process of the present disclosure, the dynamic configuration information configured for the live streaming scene can be obtained in combination with the scene identification information of the live streaming scene, in which the live streaming scene is corresponding to the target page, and then can be configured according to the following: According to the different needs of different live streaming scenarios, the dynamic update display of the page is realized, and there is no need to issue the application version, which greatly improves the convenience and efficiency of the update configuration of the application page.

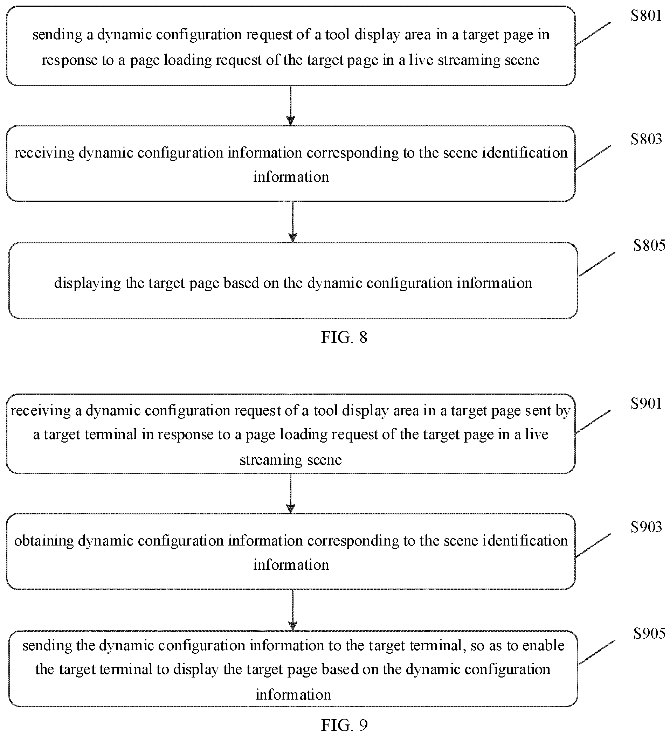

A method for displaying a page according to an embodiment of the present disclosure is described below by taking a terminal as an execution subject. As shown in FIG. 8, the method may include: step S801, sending a dynamic configuration request of a tool display area in a target page in response to a page loading request of the target page in a live streaming scene, in which the dynamic configuration request includes scene identification information of the live streaming scene, in which the live streaming scene is corresponding to the target page; step S803, receiving dynamic configuration information corresponding to the scene identification information, in which the dynamic configuration information represents attribute information of a tool set pre-configured for the live streaming scene.

Optionally, the target terminal can respond to the page loading request of the target page in the live streaming scene, send the dynamic configuration request of the tool display area in the target page to the configuration server, and then obtain the dynamic configuration information, or it can also be in the live streaming scene. After the dynamic configuration information is configured, it is sent to the target terminal in advance. Correspondingly, the target terminal can trigger the dynamic configuration request in response to the page loading request of the target page in the live streaming scene, and after triggering the dynamic configuration request, the target terminal may receive the dynamic configuration information corresponding to the scene identification information from the local cache.

The method also includes step S805, displaying the target page based on the dynamic configuration information.

Optionally, the tool display area includes at least one unit display area, and the dynamic configuration information includes a sub-tool set corresponding to each of the at least one unit display area and display configuration information of a tool in the sub-tool set, and the sub-tool set includes a plurality of tools arranged according to a display priority; displaying the target page based on the dynamic configuration information includes: obtaining preset tool authorization information; determining an authorization tool corresponding to the at least one unit display area based on the preset tool authorization information and the display priority; displaying the target page including the authorization tool based on the target display configuration information; in which, the target display configuration information is display configuration information of the authorization tool corresponding to each of the at least one unit display area.

Optionally, the dynamic configuration information further includes: at least one-level sub-tools of tools in the sub-tool set and display configuration information of the at least one-level sub-tools; the at least one unit display area displays an authorization tool corresponding to the at least one unit display area, and the method further includes: displaying a sub-tool based on the display configuration information of the sub-tool in response to a sub-tool display instruction triggered by the authorization tool corresponding to a unit display area; in which the sub-tool is a next-level sub-tool of the authorization tool corresponding to the sub-tool display instruction.

Optionally, the at least one unit display area includes a plurality of unit display areas arranged in a preset order, and determining the authorization tool corresponding to the at least one unit display area based on the preset tool authorization information and the display priority includes: traversing the plurality of unit display areas based on the preset order; determining a current tool in the sub-tool set corresponding to a currently traversed unit display area, for example, in response to traversing to any unit display area, in which the current tool is a tool with a highest display priority and without authorization verification in the sub-tool set corresponding to the currently traversed unit display area; obtaining an authorization verification result of the current tool by performing authorization verification on the current tool based on the preset tool authorization information; and determining the current tool as the authorization tool of the currently traversed unit display area in response to the authorization verification result of the current tool indicating that the authorization verification passes.

Optionally, determining the authorization tool corresponding to the at least one unit display area based on the preset tool authorization information and the display priority includes: updating the current tool in response to the authorization verification result of the current tool indicating that the authorization verification fails to pass; and based on the current tool updated, skipping to step of obtaining the authorization verification result of the current tool by performing the authorization verification on the current tool based on the preset tool authorization information.

Optionally, the above method further includes: determining that the currently traversed unit display area is null in response to the current tool being a tool with a lowest display priority in the sub-tool set corresponding to the currently traversed unit display area and the authorization verification result of the current tool indicating that the authorization verification fails to pass.

Optionally, displaying the target page including the authorization tool based on the target display configuration information includes: displaying the target page including the authorization tool based on the display configuration information of the authorization tool corresponding to a target unit display area; in which the target unit display area is a non-null unit display area in the at least one unit display area.

Hereinafter, a configuration server is used as an execution subject to introduce a method for displaying a page according to an embodiment of the present disclosure, as shown in FIG. 9, the method may include: step S901, receiving a dynamic configuration request of a tool display area in a target page sent by a target terminal in response to a page loading request of the target page in a live streaming scene, in which the dynamic configuration request includes scene identification information of the live streaming scene, in which the live streaming scene is corresponding to the target page; step S903, obtaining dynamic configuration information corresponding to the scene identification information, in which the dynamic configuration information represents attribute information of a tool set pre-configured for the live streaming scene; and step S905, sending the dynamic configuration information to the target terminal, so as to enable the target terminal to display the target page based on the dynamic configuration information.

Optionally, obtaining the dynamic configuration information corresponding to the scene identification information includes: obtaining the dynamic configuration information corresponding to the scene identification information based on first preset mapping information; in which the first preset mapping information represents a mapping relation between dynamic configuration information corresponding to a plurality of live streaming scenes and scene identification information corresponding to a live streaming scene.

Optionally, obtaining the dynamic configuration information corresponding to the scene identification information includes: determining target user type information corresponding to the target terminal; obtaining dynamic configuration information corresponding to the target user type information from the dynamic configuration information corresponding to the scene identification information based on second preset mapping information; in which the second preset mapping information represents a mapping relation between dynamic configuration information corresponding to different user type information in a plurality of live streaming scenes and scene identification information corresponding to a live streaming scene.

Optionally, before obtaining the dynamic configuration information corresponding to the scene identification information, the method further includes: obtaining a permission verification result by performing a permission verification on the target terminal based on preset dynamic configuration information; and obtaining the dynamic configuration information corresponding to the scene identification information in response to the permission verification result indicating that the permission verification passes.

Regarding the methods in the foregoing embodiments, the specific implementation manner of each step has been described in detail in the embodiments of the relevant methods, and will not be described in detail here.

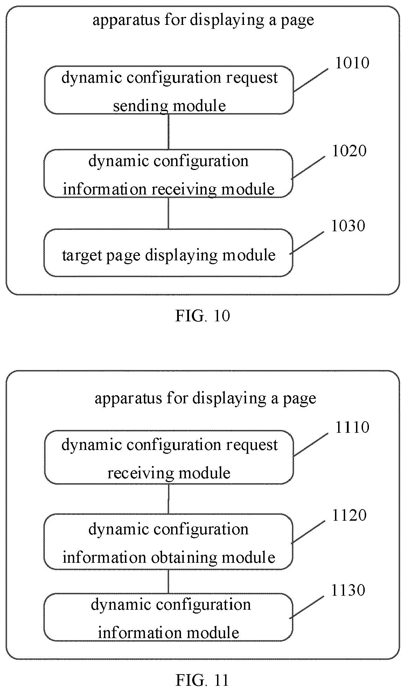

FIG. 10 is a block diagram of an apparatus for displaying a page according to an exemplary embodiment. Referring to FIG. 10, the apparatus includes: a dynamic configuration request sending module 1010, configured to send a dynamic configuration request of a tool display area in a target page in response to a page loading request of the target page in a live streaming scene, in which the dynamic configuration request includes scene identification information of the live streaming scene, in which the live streaming scene is corresponding to the target page; a dynamic configuration information receiving module 1020, configured to receive dynamic configuration information corresponding to the scene identification information, in which the dynamic configuration information represents attribute information of a tool set pre-configured for the live streaming scene; and a target page displaying module 1030, configured to display the target page based on the dynamic configuration information.

Optionally, the tool display area includes at least one unit display area, and the dynamic configuration information includes a sub-tool set corresponding to each of the at least one unit display area and display configuration information of a tool in the sub-tool set, and the sub-tool set includes a plurality of tools arranged according to a display priority; the target page displaying module 1030 includes: a preset tool authorization information obtaining unit, configured to obtain preset tool authorization information; an authorization tool determining unit, configured to determine an authorization tool corresponding to the at least one unit display area based on the preset tool authorization information and the display priority; a target page displaying unit, configured to display the target page including the authorization tool based on the target display configuration information; in which, the target display configuration information is display configuration information of the authorization tool corresponding to each of the at least one unit display area.

Optionally, the dynamic configuration information further includes: at least one-level sub-tools of tools in the sub-tool set and display configuration information of the at least one-level sub-tools; the at least one unit display area displays an authorization tool corresponding to the at least one unit display area, and the apparatus further includes: a sub-tool displaying module, configured to display a sub-tool based on the display configuration information of the sub-tool in response to a sub-tool display instruction triggered by the authorization tool corresponding to a unit display area; in which the sub-tool is a next-level sub-tool of the authorization tool corresponding to the sub-tool display instruction.

Optionally, the at least one unit display area includes a plurality of unit display areas arranged in a preset order, and the authorization tool determining unit includes: a unit display area traversing unit, configured to traverse the plurality of unit display areas based on the preset order; a current tool determining unit, configured to determine a current tool in the sub-tool set corresponding to a currently traversed unit display area, for example, in response to traversing to any unit display area, in which the current tool is a tool with a highest display priority and without authorization verification in the sub-tool set corresponding to the currently traversed unit display area; an authorization verification unit, configured to obtain an authorization verification result of the current tool by performing authorization verification on the current tool based on the preset tool authorization information; and an authorization tool sub unit, configured to determine the current tool as the authorization tool of the currently traversed unit display area in response to the authorization verification result of the current tool indicating that the authorization verification passes.

Optionally, the authorization tool unit includes: a current tool updating unit, configured to update the current tool in response to the authorization verification result of the current tool indicating that the authorization verification fails to pass; and a skipping unit, configured to skip to, based on the current tool updated, step of obtaining the authorization verification result of the current tool by performing the authorization verification on the current tool based on the preset tool authorization information.

Optionally, the above apparatus also includes: a null unit display area determining unit, configured to determine that the currently traversed unit display area is null in response to the current tool being a tool with a lowest display priority in the sub-tool set corresponding to the currently traversed unit display area and the authorization verification result of the current tool indicating that the authorization verification fails to pass.

Optionally, the target page displaying unit is further configured to: display the target page including the authorization tool based on the display configuration information of the authorization tool corresponding to a target unit display area; in which the target unit display area is a non-null unit display area in the at least one unit display area.

Regarding the apparatus in the above-mentioned embodiment, the specific manner in which each module performs operations has been described in detail in the embodiment of the method, and will not be described in detail here.

FIG. 11 is a block diagram of an apparatus for displaying a page according to an exemplary embodiment. Referring to FIG. 11, the apparatus includes: a dynamic configuration request receiving module 1110, configured to receive a dynamic configuration request of a tool display area in a target page sent by a target terminal in response to a page loading request of the target page in a live streaming scene, in which the dynamic configuration request includes scene identification information of the live streaming scene, in which the live streaming scene is corresponding to the target page; a dynamic configuration information obtaining module 1120, configured to obtain dynamic configuration information corresponding to the scene identification information, in which the dynamic configuration information represents attribute information of a tool set pre-configured for the live streaming scene; and a dynamic configuration information module 1130, configured to send the dynamic configuration information to the target terminal, so as to enable the target terminal to display the target page based on the dynamic configuration information.

Optionally, the dynamic configuration information obtaining module 1120 is configured to: obtain the dynamic configuration information corresponding to the scene identification information based on first preset mapping information; in which the first preset mapping information represents a mapping relation between dynamic configuration information corresponding to a plurality of live streaming scenes and scene identification information corresponding to a live streaming scene.

Optionally, the dynamic configuration information obtaining module 1120 includes: a target user type information determining unit, configured to determine target user type information corresponding to the target terminal; a dynamic configuration information obtaining unit, configured to obtain dynamic configuration information corresponding to the target user type information from the dynamic configuration information corresponding to the scene identification information based on second preset mapping information; in which the second preset mapping information represents a mapping relation between dynamic configuration information corresponding to different user type information in a plurality of live streaming scenes and scene identification information corresponding to a live streaming scene.

Optionally, the apparatus also includes: a permission verification module, configured to obtain a permission verification result by performing a permission verification on the target terminal based on preset dynamic configuration information; and in which the dynamic configuration information obtaining module is configured to obtain the dynamic configuration information corresponding to the scene identification information in response to the permission verification result indicating that the permission verification passes.

Regarding the apparatus in the above-mentioned embodiment, the specific manner in which each module performs operations has been described in detail in the embodiment of the method, and will not be described in detail here.

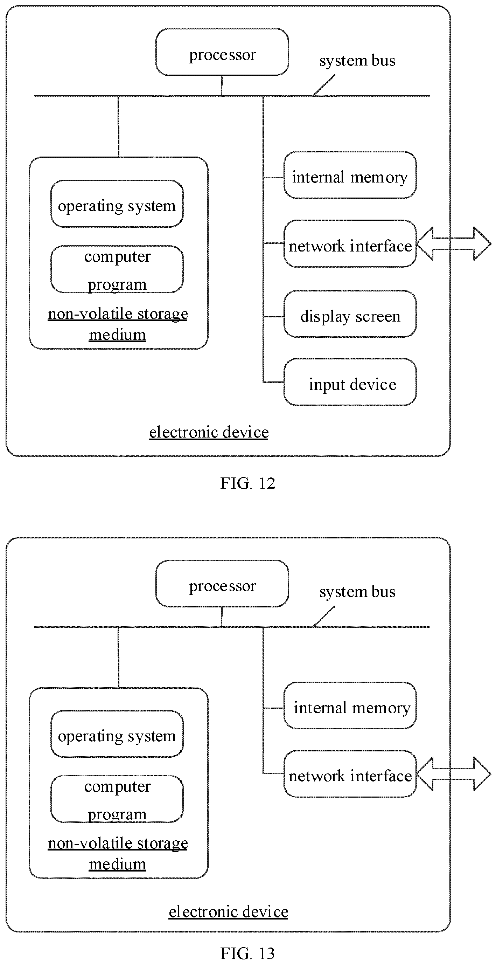

FIG. 12 is a block diagram of an electronic device for displaying a page according to an exemplary embodiment. The electronic device may be a terminal, and its internal structure diagram may be as shown in FIG. 12. The electronic device includes a processor, a memory, a network interface, a display screen, and an input device connected via a system bus. The processor of the electronic device is used to provide computing and control capabilities. The memory of the electronic device includes a non-volatile storage medium and an internal memory. The non-volatile storage medium stores an operating system and a computer program. The internal memory provides an environment for the execution of the operating system and computer programs in the non-volatile storage medium. The network interface of the electronic device is used to communicate with an external terminal through a network connection. When the computer program is executed by the processor, the method for displaying a page is realized. The display screen of the electronic device may be a liquid crystal display screen or an electronic ink display screen, and the input device of the electronic device may be a touch layer covered on the display screen, or a button, a trackball or a touchpad set on the shell of the electronic device, or an external keyboard, trackpad, or mouse.

FIG. 13 is a block diagram of an electronic device for displaying a page according to an exemplary embodiment. The electronic device may be a server, and its internal structure diagram may be as shown in FIG. 13. The electronic device includes a processor, memory, and a network interface connected by a system bus. The processor of the electronic device is used to provide computing and control capabilities. The memory of the electronic device includes a non-volatile storage medium and an internal memory. The non-volatile storage medium stores an operating system and a computer program. The internal memory provides an environment for the execution of the operating system and computer programs in the non-volatile storage medium. The network interface of the electronic device is used to communicate with an external terminal through a network connection. When the computer program is executed by the processor, a page display method is realized.

Those skilled in the art can understand that the structure shown in FIG. 12 or FIG. 13 is only a block diagram of a partial structure related to the solution of the present disclosure, and does not constitute a limitation on the electronic device to which the solution of the present disclosure is applied. An electronic device may include more or fewer components than shown in the figures, or combine certain components, or have a different arrangement of components.

In an exemplary embodiment, there is also provided an electronic device, including: a processor; a memory for storing instructions executable by the processor; in which the execution of the instructions causes the processor to execute the instructions to implement the method for displaying a page of embodiments of the present disclosure.

In an exemplary embodiment, a computer-readable storage medium is also provided, when the instructions in the storage medium are executed by the processor of the electronic device, the electronic device can execute the method for displaying a page in the embodiment of the present disclosure.

In an exemplary embodiment, there is also provided a computer program product containing instructions. When the instructions are executed on a computer, the computer is caused to execute the method for displaying a page in the embodiment of the present disclosure.

Those of ordinary skill in the art can understand that all or part of the processes in the methods of the above embodiments can be implemented by instructing relevant hardware through a computer program, and the computer program can be stored in a non-volatile computer-readable storage medium, when the computer program is executed, it may include the processes of the above-mentioned method embodiments. Any reference to memory, storage, database or other medium used in the various embodiments provided in the present disclosure may include non-volatile and/or volatile memory. The non-volatile memory may include read only memory (ROM), programmable ROM (PROM), electrically programmable ROM (EPROM), electrically erasable programmable ROM (EEPROM), or flash memory. Volatile memory may include random access memory (RAM) or external cache memory. By way of illustration and not limitation, RAM is available in various forms such as static RAM (SRAM), dynamic RAM (DRAM), synchronous DRAM (SDRAM), double data rate SDRAM (DDRSDRAM), enhanced SDRAM (ESDRAM), synchronous chain Road (Synchlink) DRAM (SLDRAM), memory bus (Rambus) direct RAM (RDRAM), direct memory bus dynamic RAM (DRDRAM), and memory bus dynamic RAM (RDRAM), etc.

Other embodiments of the present disclosure will readily occur to those skilled in the art upon consideration of the specification and practice of the invention disclosed herein. The specification and examples are to be regarded as exemplary only, with the true scope and spirit of the disclosure being indicated by the following claims.

## Claims

1. A method for displaying a page, comprising:
sending (S801) a dynamic configuration request of a tool display area in a target page in response to a page loading request of the target page in a live streaming scene, wherein the dynamic configuration request comprises scene identification information of the live streaming scene, wherein the live streaming scene is corresponding to the target page;
receiving (S803) dynamic configuration information corresponding to the scene identification information, wherein the dynamic configuration information represents attribute information of a tool set pre-configured for the live streaming scene; and
displaying (S805) the target page based on the dynamic configuration information.

2. The method of claim 1, wherein the tool display area comprises at least one unit display area, and the dynamic configuration information comprises a sub-tool set corresponding to each of the at least one unit display area and display configuration information of a tool in the sub-tool set, and the sub-tool set comprises a plurality of tools arranged according to a display priority;
wherein said displaying (S805) the target page based on the dynamic configuration information comprises:
obtaining preset tool authorization information;
determining an authorization tool corresponding to the at least one unit display area based on the preset tool authorization information and the display priority;
displaying the target page comprising the authorization tool based on the display configuration information;
wherein, the display configuration information is display configuration information of the authorization tool corresponding to each of the at least one unit display area.

3. The method of claim 2, wherein the dynamic configuration information further comprises: at least one-level sub-tools of tools in the sub-tool set and display configuration information of the at least one-level sub-tools; the at least one unit display area displays the authorization tool corresponding to the at least one unit display area, and the method further comprises:
displaying a sub-tool based on the display configuration information of the sub-tool in response to a sub-tool display instruction triggered by an authorization tool corresponding to a unit display area;
wherein the sub-tool is a next-level sub-tool of the authorization tool corresponding to the sub-tool display instruction.

4. The method of claim 2, wherein the at least one unit display area comprises a plurality of unit display areas arranged in a preset order, and said determining the authorization tool corresponding to the at least one unit display area based on the preset tool authorization information and the display priority comprises:
traversing the plurality of unit display areas based on the preset order;
determining a current tool in the sub-tool set corresponding to a currently traversed unit display area, wherein the current tool is a tool with a highest display priority and without authorization verification in the sub-tool set corresponding to the currently traversed unit display area;
obtaining an authorization verification result of the current tool by performing authorization verification on the current tool based on the preset tool authorization information; and
determining the current tool as the authorization tool of the currently traversed unit display area in response to the authorization verification result of the current tool indicating that the authorization verification passes.

5. The method of claim 4, wherein said determining the authorization tool corresponding to the at least one unit display area based on the preset tool authorization information and the display priority comprises:
updating the current tool in response to the authorization verification result of the current tool indicating that the authorization verification fails to pass; and
based on the current tool updated, skipping to step of said obtaining the authorization verification result of the current tool by performing the authorization verification on the current tool based on the preset tool authorization information.

6. The method of claim 4, further comprising:
determining that the currently traversed unit display area is null in response to the current tool being a tool with a lowest display priority in the sub-tool set corresponding to the currently traversed unit display area and the authorization verification result of the current tool indicating that the authorization verification fails to pass.

7. The method of claim 6, wherein said displaying the target page comprising the authorization tool based on the display configuration information comprises:
displaying the target page comprising the authorization tool based on the display configuration information of the authorization tool corresponding to a target unit display area;
wherein the target unit display area is a non-null unit display area in the at least one unit display area.

8. A method for displaying a page, comprising:
receiving (S901) a dynamic configuration request of a tool display area in a target page sent by a target terminal in response to a page loading request of the target page in a live streaming scene, wherein the dynamic configuration request comprises scene identification information of the live streaming scene, wherein the live streaming scene is corresponding to the target page;
obtaining (S903) dynamic configuration information corresponding to the scene identification information, wherein the dynamic configuration information represents attribute information of a tool set pre-configured for the live streaming scene; and
sending (S905) the dynamic configuration information to the target terminal, so as to enable the target terminal to display the target page based on the dynamic configuration information.

9. The method of claim 8, wherein said obtaining (S903) the dynamic configuration information corresponding to the scene identification information comprises:
obtaining the dynamic configuration information corresponding to the scene identification information based on first preset mapping information;
wherein the first preset mapping information represents a mapping relation between dynamic configuration information corresponding to a plurality of live streaming scenes and scene identification information corresponding to a live streaming scene.

10. The method of claim 8, wherein said obtaining the dynamic configuration information corresponding to the scene identification information comprises:
determining target user type information corresponding to the target terminal;
obtaining dynamic configuration information corresponding to the target user type information from the dynamic configuration information corresponding to the scene identification information based on second preset mapping information;
wherein the second preset mapping information represents a mapping relation between dynamic configuration information corresponding to different user type information in a plurality of live streaming scenes and scene identification information corresponding to a live streaming scene.

11. The method claim 8, wherein before obtaining the dynamic configuration information corresponding to the scene identification information, the method further comprises:
obtaining a permission verification result by performing a permission verification on the target terminal based on preset dynamic configuration information; and
obtaining the dynamic configuration information corresponding to the scene identification information in response to the permission verification result indicating that the permission verification passes.

12. An apparatus for displaying a page, comprising:
a dynamic configuration request sending module, configured to send a dynamic configuration request of a tool display area in a target page in response to a page loading request of the target page in a live streaming scene, wherein the dynamic configuration request comprises scene identification information of the live streaming scene, wherein the live streaming scene is corresponding to the target page;
a dynamic configuration information receiving module, configured to receive dynamic configuration information corresponding to the scene identification information, wherein the dynamic configuration information represents attribute information of a tool set pre-configured for the live streaming scene; and
a page displaying module, configured to display the target page based on the dynamic configuration information.

13. An electronic device, comprising:
a processor;
a memory for storing instructions executable by the processor;
wherein, the processor is configured to execute the instructions to implement the method of any of claims 1 to 11.

14. A non-volatile computer-readable storage medium, wherein when instructions in the storage medium are executed by a processor of an electronic device, the electronic device is caused to execute the method of any of claims 1 to 11.

15. A computer program product comprising computer instructions, wherein when the computer instructions are executed by a processor, the method of any of claims 1 to 11 is implemented.
